# EUROPÄISCHE PATENTSCHRIFT

(11) **EP 1 321 008 B1**
(45) Veröffentlichungstag und Bekanntmachung des Hinweises auf die Patenterteilung: **08.08.2007**
(21) Anmeldenummer: 00981141.5
(22) Anmeldetag: 29.09.2000
(51) Int. Cl.: H04Q 7/36

(54) **KOMMUNIKATIONSSYSTEM SOWIE DAZUGEHÖRIGES VERFAHREN ZUR VERBESSERUNG SEINER DIENSTGÜTE**
COMMUNICATION SYSTEM AND CORRESPONDING METHOD FOR IMPROVING THE SERVICE QUALITY THEREOF
SYSTEME DE COMMUNICATION ET PROCEDE CORRESPONDANT POUR AMELIORER LA QUALITE DE SERVICE DUDIT SYSTEME

(43) Veröffentlichungstag der Anmeldung: 25.06.2003
(73) Patentinhaber: SIEMENS AKTIENGESELLSCHAFT, 80333 München (DE)
(72) Erfinder: ARETZ, Kurt, 46419 Isselburg (DE); BOLINTH, Edgar, 41189 Möchengladbach (DE); GROETING, Wolfgang, 46354 Suedlohn (DE); KERN, Ralf, 46399 Bocholt (DE)
(86) Internationale Anmeldenummer: PCT/DE2000/003438
(87) Internationale Veröffentlichungsnummer: WO 2002/028136

(56) Entgegenhaltungen:
- EP-A- 1 009 182
- WO-A-99/11081
- US-A- 6 134 587
- PATENT ABSTRACTS OF JAPAN vol. 1998, no. 11, 30. September 1998 (1998-09-30) & JP 10 155184 A (NEC CORP), 9. Juni 1998 (1998-06-09)

## Beschreibung

Die vorliegende Erfindung bezieht sich auf ein Kommunikationssystem nach dem Oberbegriff von Anspruch 1 sowie ein dazugehöriges Verfahren nach dem Oberbegriff des von Anspruch 3 zur Verbesserung seiner Dienstgüte und insbesondere auf ein Kommunikationssystem sowie ein dazugehöriges Verfahren bei einem gemeinsam genutzten Übertragungsmedium.

Ein solches Kommunikationssystem und auch ein dazugehöriges Verfahren ist aus der WO 99/11081 A bekannt, wobei eine Mehrzahl Teilnehmerstationen eines Mobilfunknetzwerkes vorgesehen ist, deren jede sowohl eine Master- als auch eine Slave-Funktion ausüben kann. Die Verteilung der Funktionen auf die Teilnehmerstationen erfolgt mittels Auswertung von Dienstgütemessungen in dem Mobilfunksystem.

Aufgrund einer deutlichen Zunahme beispielsweise von schnurlosen Kommunikationssystemen wird in Zukunft häufig der Fall auftreten, dass zwei oder mehrere unabhängige Kommunikationssysteme ein gleiches Übertragungsmedium wie z.B. Frequenzbänder nutzen. Hierdurch kann es zu Störungen bis hin zum Ausfall einzelner oder mehrerer dieser Kommunikationssysteme kommen.

Bei Verwendung von beispielsweise zwei Kommunikationssystemen, die nach dem gleichen Übertragungsverfahren bzw. Übertragungsformat (z.B. DECT) arbeiten, sind in deren Standards Verfahren festgelegt, um derartige Störungen zu umgehen. Diese herkömmlichen Verfahren sind beispielsweise unter dem Begriff dynamische Kanalzuordnung (Dynamic Channel Allocation) bekannt. Auf diese Weise können Störungen und Kollisionen von unabhängigen Kommunikationsystemen bis zu einem gewissen Grad vermieden werden.

Insbesondere bei Verwendung von unabhängigen Kommunikationssystemen, die nach unterschiedlichen Übertragungsverfahren arbeiten und ein gemeinsames Übertragungsmedium nutzen, wie z.B. Bluetooth, HomeRF, Powerline Communications (PLC) usw., treten zum Teil erhebliche Störungen auf, die bis hin zum Ausfall eines Typs von Kommunikationssystem führen können. Bei einem gemeinsam genutzten Übertragungsmedium, wie z.B. dem ISM-Frequenzband (Industrial, Scientific, Medical), in dem eine Vielzahl von Kommunikationssystemen bis zu einem vorbestimmten Sendepegel arbeiten können, kann es daher zu starken Störungen bzw. zu einer nicht vollen Ausnutzung der Ressourcen des gemeinsam genutzten Übertragungsmediums kommen. Genauer gesagt kann beispielsweise ein Kommunikationssystem in einem gemeinsam genutzten Übertragungsmedium nicht mehr oder nur unzureichend funktionieren, in dem beispielsweise auch Mikrowellen, Funkfernbedienungen, Babyphones, und dergleichen arbeiten.

Der Erfindung liegt daher die Aufgabe zugrunde, ein Kommunikationssystem sowie ein dazugehöriges Verfahren zur Verbesserung seiner Dienstgüte zu schaffen, welches einfach und kostengünstig zu realisieren ist.

Erfindungsgemäß wird diese Aufgabe hinsichtlich des Kommunikationssystems durch die Merkmale des Patentanspruchs 1 und hinsichtlich des Verfahrens durch die Maßnahmen des Patentanspruchs 3 gelöst.

Insbesondere durch die Verwendung von Koordinierungs-Umschaltern in einer Basisstation und zumindest einem Teil von weiteren Stationen des Kommunikationssystems zum Umschalten von verschiedenen Koordinierungsfunktionalitäten, einer Dienstgüteerfassungsvorrichtung zum Erfassen einer Dienstgüte im Kommunikationssystem und einer Analysevorrichtung zum Analysieren der Dienstgüte, wobei die Koordinierungs-Umschalter in Abhängigkeit von der durchgeführten Analyse gesteuert werden, kann eine optimale Dienstgüte im Kommunikationssystem erreicht und Störsignalen ausgewichen werden.

Vorzugsweise kann die Dienstgüteerfassungsvorrichtung bzw. die Analysevorrichtung eine Übertragungsqualität von räumlich, zeitlich und/oder nach Frequenz oder Code aufgeteilte Übertragungsresourcen erfassen bzw. analysieren. Auf diese Weise kann nicht nur eine optimale räumliche Abdeckung im Kommunikationssystem geschaffen werden, sondern auch eine optimale Anpassung an eventuelle Störsignale erfolgen, die in vorbestimmten Zeit- oder Frequenzbereichen auftreten.

Darüber hinaus kann zumindest ein Teil der Stationen eine externe Übertragungsschnittstelle zur Realisierung einer Datenübertragung mit fremden Kommunikationssystemen aufweisen, wodurch eine Absprache von unterschiedlichen Kommunikationssystemen zur Verbesserung einer jeweiligen Dienstgüte herbeigeführt werden kann.

In den weiteren Unteransprüchen sind weitere vorteilhafte Ausgestaltungen der Erfindung gekennzeichnet.

Die Erfindung wird nachfolgend an Hand von Ausführungsbeispielen unter Bezugnahme auf die Zeichnung näher beschrieben.

Es zeigen:
- Figur 1: eine vereinfachte Darstellung eines Kommunikationsnetzwerks mit zwei Kommunikationssystemen ohne Verbesserung einer Dienstgüte;
- Figur 2: eine vereinfachte Darstellung eines Kommunikationsnetzwerks mit zwei Kommunikationssystemen nach Verbesserung einer Dienstgüte gemäß einem ersten Ausführungsbeispiel; und
- Figur 3: eine vereinfachte Darstellung eines Kommunikationsnetzwerks mit zwei Kommunikationssystemen nach Verbesserung einer Dienstgüte gemäß einem zweiten Ausführungsbeispiel.

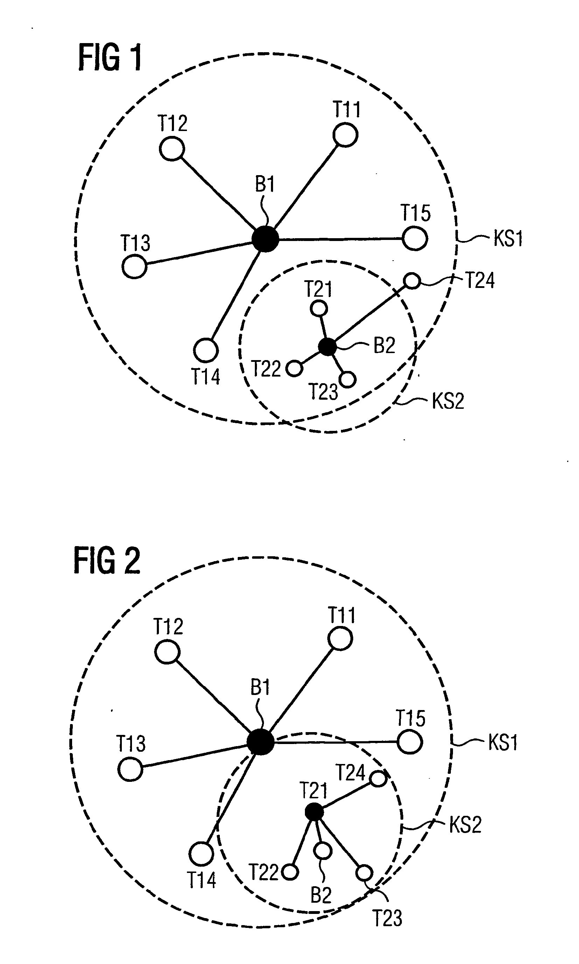

Figur 1 zeigt eine vereinfachte Darstellung eines Kommunikationsnetzwerks mit zwei Kommunikationssystemen KS1 und KS2, welche ein gemeinsames Übertragungsmedium nutzen. Beispiele für derartige Kommunikationssysteme sind beispielsweise Systeme wie Bluetooth, HomeRF, IEEE 802.11 usw. Die Erfindung ist jedoch nicht darauf beschränkt, sondern umfasst in gleicher Weise drahtgebundene Kommunikationssysteme wie beispielsweise leitungsgebundene Multiträgersysteme, die als HomePNA, PLC usw. bekannt sind. In all diesen Systemen kann ein gemeinsames Übertragungsmedium von einer Vielzahl von unabhängigen Kommunikationssystemen genutzt werden.

Gemäß Figur 1 besitzt das Kommunikationssystem KS1 eine Basisstation B1 mit einer Punkt/Multipunkt-Verbindung zu weiteren Stationen T11 bis T15. In einer schnurlosen Applikation sind derartige weitere Stationen beispielsweise die mobilen Teilnehmerendgeräte. Eine gestrichelte Linie in Figur 1 bezeichnet eine maximale Kommunikationsreichweite eines jeweiligen Kommunikationssystems. Gemäß Figur 1 befindet sich innerhalb der Reichweite des Kommunikationssystems KS1 ein weiteres Kommunikationssystem KS2 mit einer geringeren Reichweite. Das Kommunikationssystem KS2 besitzt wiederum eine Basisstation B2 sowie eine Vielzahl von weiteren Stationen bzw. mobilen Teilnehmerendgeräten T21 bis T24.

Bei dem in Figur 1 dargestellten Kommunikationsnetzwerk mit Kommunikationssystemen ohne Verbesserung einer Dienstgüte tritt zunächst ein Fall auf, dass die Basisstation B1 des Kommunikationssystems KS1 aufgrund der geringen Reichweite des Kommunikationssystems KS2 dieses nicht hören bzw. erfassen kann. Umgekehrt kann jedoch beispielsweise die Basisstation B2 bzw. der Master des Kommunikationssystems KS2 das Kommunikationssystem KS1 erkennen und auch eine Verschlechterung seiner Dienstgüte aufgrund von Störungen erfassen. Im Extremfall führt diese Konstellation dazu, dass das Kommunikationssystem KS2 vom Kommunikationssystem KS1 derart gestört wird, dass es unter Umständen nicht arbeitsfähig ist. Darüber hinaus tritt bei der in Figur 1 dargestellten Konstellation ohne Verbesserung einer Dienstgüte der Fall auf, dass eine Station T24 außerhalb der Reichweite des Kommunikationssystems KS2 liegt und somit nicht oder nur mit einer sehr schlechten Dienstgüte eingebunden ist.

Unter einer Dienstgüte bzw. Quality of Service (QoS) versteht man gemäß der vorliegenden Erfindung im wesentlichen eine Übertragungsqualität von Kommunikationsverbindungen, die in einem Zeitbereich, einem Frequenzbereich, einem Codebereich, einem räumlichen Bereich usw. eines gemeinsam genutzten Übertragungsmediums getrennt sind. Die Übertragungsqualität kann beispielsweise als Bitfehlerrate bestimmt werden. Genauer gesagt bedeutet eine Dienstgüte in einem Zeitbereich, dass eine Ubertragungsqualität über einen maximalen Zeitraum gegeben ist. Wenn beispielsweise ein zeitlich begrenzt wirkendes Störsignal vorliegt, so kann eine Dienstgüte im Zeitbereich dadurch verbessert werden, dass die ungestörten Zeitbereiche optimal zur Übertragung genutzt werden. In gleicher Weise betrifft eine Dienstgüte im Frequenzbereich eine Übertragungsqualität in vorbestimmten Bandbreitenkanälen bzw. Trägern eines gemeinsam genutzten Übertragungsmediums. Eine Dienstgüte im Frequenzbereich kann beispielsweise dadurch verbessert werden, dass der Frequenzbereich des Störsignals ausgespart wird und lediglich in nicht gestörten Trägern bzw. Kanälen übertragen wird. Eine Dienstgüte in einem räumlichen Bereich bezieht sich schließlich auf eine Übertragungsqualität in einem räumlichen Bereich des gesamten Kommunikationssystems, wobei eine maximale Abdeckung bzw. eine optimale Übertragungsqualität für alle zur Verfügung stehenden Stationen angestrebt wird. Darüber hinaus kann eine Dienstgüte dadurch verbessert werden, dass ein Kommunikationssystem eine Möglichkeit zur Kommunikation mit fremden Kommunikationssystemen besitzt und dadurch Absprachen zur Verbesserung einer Dienstgüte in einem gesamten Kommunikationsnetzwerk herbeigeführt werden.

Zur Verbesserung einer räumlichen Dienstgüte besitzt die Basisstation und zumindest ein Teil der weiteren Stationen T21 bis T24 einen Koordinierungs-Umschalter zum Umschalten einer jeweiligen Koordinierungsfunktionalität zwischen beteiligten Stationen. Beispielsweise kann eine derartige Koordinierungsfunktionalität zur Verbesserung einer räumlichen Dienstgüte eine Punkt/Punkt- oder Punkt/Multipunkt-Verbindung in den jeweiligen Stationen des Kommunikationssystems sein. Genauer gesagt besitzt somit zumindest ein Teil der Stationen im Kommunikationssystem KS2 die Fähigkeit sowohl als sogenannter Master oder als sogenannter Slave zu arbeiten. Gemäß Figur 1 realisiert zunächst die Basisstation B2 eine Punkt/Multipunkt-Verbindung bzw. einen Master des Kommunikationssystems KS2 während die weiteren Stationen T21 bis T24 Punkt/Punkt-Verbindungen aufweisen.

Ferner besitzt das Kommunikationssystem KS2 eine Dienstgüteerfassungsvorrichtung, die sich vorzugsweise unmittelbar in den Stationen befindet und beispielsweise durch Austausch mit allen Stationen für ein gesamtes Kommunikationssystem KS2 eine jeweilige Dienstgüte für eine bestimmte Koordinierungsfunktionalität ermittelt. Bei der Konstellation gemäß Figur 1 wird eine derartige Dienstgüteerfassungsvorrichtung eine verschlechterte (räumliche) Dienstgüte erfassen, da sich die Station T24 außerhalb der Reichweite des Kommunikationssystems KS2 befindet. Ferner existiert eine starke Störung aufgrund des überlagerten Kommunikationssystems KS1.

Zur Verbesserung einer Dienstgüte zumindest im Kommunikationssystem KS2 wird daher systematisch oder zufällig eine Koordinierungs-Umorganisation für das Kommunikationssystem KS2 durchgeführt. Genauer gesagt wird beispielsweise nacheinander jede Station T21 bis T24 in einen Koordinierungsfunktionalität Punkt/Multipunkt-Verbindung bzw. einem sogenannten Mastermode geschaltet und eine jeweilige Dienstgüte im Kommunikationssystem KS2 erfasst. Nach wiederholtem Durchführen dieser Koordinierungs-Umorganisation und einer dazugehörigen Dienstgüteerfassung werden schließlich die erfassten Dienstgüten von einer Analysevorrichtung analysiert und in Abhängigkeit vom Analyseergebnis die Koordinierungs-Organisation ausgewählt, welche die beste Dienstgüte bzw. eine beste räumliche Abdeckung ermöglicht.

Gemäß Figur 2 ergibt sich eine derartige Verbesserung der z.B. räumlichen Dienstgüte durch eine Koordinierungs-Organisation, bei der eine Station T21 nunmehr als Punkt/Multipunkt-Verbindung bzw. Master arbeitet und die weiteren Stationen T22 bis T24 sowie die frühere Basisstation B2 als Punkt/Punkt-Verbindungen bzw. Slave funktionieren. Auf diese Weise kann die Reichweite des Kommunikationssystems KS2 derart verschoben werden, dass nunmehr auch die Station T24 erreicht wird, wodurch man eine maximale räumliche Abdeckung aller im Kommunikationssystem KS2 befindlichen Stationen erhält. Darüber hinaus ergibt sich jedoch aufgrund der Verlagerung des Masters von der Basisstation B2 auf die Station T21 eine Berührung mit der Basisstation B1 des Kommunikationssystems KS1, wodurch dieses Kommunikationssystem nunmehr erstmals von der Existenz eines weiteren Kommunikationssystems erfährt. Obwohl sich die eine Dienstgüte (Übertragungsqualität) des Kommunikationssystems KS 2 aufgrund einer erhöhten Störung durch das Kommunikationssystem KS 1 verschlechtert, liegt der Vorteil bei einer derartigen Angriffsstrategie darin, dass nunmehr das Kommunikationssystem KS1, sofern es sich um ein intelligentes System handelt, eine entsprechende Ausweichstrategie durchführt und beispielsweise einen Sendepegel bzw. die Reichweite des Kommunikationssystems bis auf ein Minimum verringert. Auf diese Weise kann eine Dienstgüte bzw. eine Übertragungsqualität in einem gesamten Kommunikationsnetzwerk KS1 und KS2 wesentlich verbessert werden, da nunmehr ohne Verschlechterung der Dienstgüte im Kommunikationssystem KS1 eine Dienstgüte im Kommunikationssystem KS2 wesentlich verbessert ist.

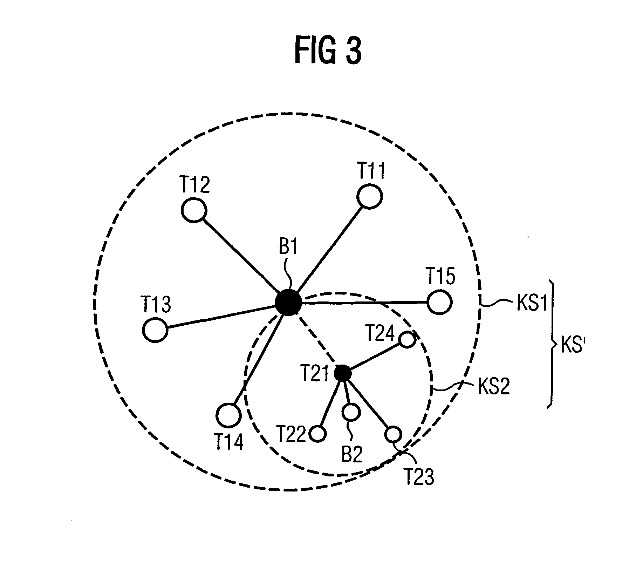

Gemäß Figur 3 kann nach einer Verbesserung einer Dienstgüte gemäß einem zweiten Ausführungsbeispiel neben der wie in Figur 2 durchgeführten räumlichen Koordinierungs-Umorganisation ferner eine externe Kommunikation zwischen dem Kommunikationssystem KS1 und dem Kommunikationssystem KS2 hergestellt werden. Zur Realisierung einer derartigen Datenübertragung mit fremden Kommunikationssystemen besitzt jede Station neben einer internen Übertragungsschnittstelle zur Realisierung einer Datenübertragung innerhalb des Kommunikationssystems zusätzlich eine externe Übertragungsschnittstelle, wodurch eine Absprache beider Kommunikationssysteme stattfinden kann. Im Zuge einer derartigen Absprache kann nunmehr das gemeinsam genutzte Übertragungsmedium derart räumlich, zeitlich, codemäßig und/oder frequenzmäßig aufgeteilt werden, dass sich für die Kommunikationssysteme KS1 und KS2 jeweils eine optimale Dienstgüte bzw. Übertragungsqualität ergibt. Hierbei gilt grundsätzlich, dass ein Kommunikationssystem um so robuster ist, je mehr freie Parameter zum Durchführen einer Ausweichstrategie vorliegen.

Stellt das Kommunikationssystem KS1 beispielsweise einen sogenannten Frequency-Hopper dar, so kann eine Dienstgüte im Zeitbereich beispielsweise dadurch verbessert werden, dass nach Analyse der sich zeitlich wiederholenden Frequenzsprünge im Kommunikationssystem KS1 das Kommunikationssystem KS2 dem System KS1 zeitversetzt folgt, wodurch zu jedem Zeitpunkt eine Kollision vermieden wird. In diesem Fall können sowohl gleiche Frequenzbereich (Bandbreiten bzw. Träger) als auch identische räumliche Bereiche genutzt werden.

In gleicher Weise kann ein derartiges Kommunikationssystem sowie das dazugehörige Verfahren zur Verbesserung seiner Dienstgüte auch auf problematische Störquellen reagieren, wie sie beispielsweise Mikrowellen, Babyphones, Funkfernsteuerungen und dergleichen darstellen. Durch systematisches Erfassen und Analysieren der Störquellen bzw. der sich ergebenden Dienstgüten kann mit dem erfindungsgemäßen Kommunikationssystem bzw. dem dazugehörigen Verfahren eine Ausweichstrategie derart entwickelt werden, dass ein zur Verfügung stehendes Spektrum eines gemeinsam genutzten Übertragungsmediums optimal ausgenutzt wird und sowohl robustere als auch zuverlässigere Kommunikationssysteme entstehen.

Die Erfindung wurde vorstehend an Hand eines schnurlosen Kommunikationssystems beschrieben. Sie ist jedoch nicht darauf beschränkt und umfasst vielmehr alle weiteren Kommunikationssysteme wie z.B. leitungsgebundene Multiträgersysteme, die ein gemeinsam genutztes Übertragungsmedium verwenden.

## Patentansprüche

1. Kommunikationssystem mit
zumindest einer Basisstation (B2) und zumindest einer weiteren Station (T21 bis T24), wobei die Basisstation (B2) und/oder zumindest ein Teil der weiteren Stationen (T21 bis T24) einen Koordinierungs-Umschalter zum Umschalten einer Koordinierungsfunktionalität zwischen beteiligten Stationen; eine Dienstgüteerfassungsvorrichtung zum Erfassen einer Dienstgüte im Kommunikationssystem (KS2); und
eine Analysevorrichtung zum Durchführen einer Analyse der erfassten Dienstgüte des Kommunikationssystems (KS2) aufweisen, wobei die oKoordinierungs-Umschalter der Stationen (B2, T21 bis T24) in Abhängigkeit von der durchgeführten Analyse gesteuert werden, **dadurch**
**gekennzeichnet , dass** zumindest ein Teil der Stationen eine externe Übertragungsschnittstelle zur . Realisierung einer Datenübertragung mit einem fremden Kommunikationssystem (KS1) aufweist, wobei das fremde Kommunikationssystem (KS1) und das Kommunikationssystem (KS2) zur Nutzung eines gemeinsamen Übertragungsmediums ausgebildet sind.

2. Kommunikationssystem nach Patentanspruch 1, **dadurch gekennzeichnet , dass** die Dienstgüteerfassungsvorrichtung und die Analysevorrichtung eine Übertragungsqualität von räumlich, zeitlich und/oder nach Frequenz oder Code aufgeteilten Übertragungsressourcen erfassen und analysieren.

3. Verfahren zur Verbesserung einer Dienstgüte in Kommunikationssystemen mit den Schritten:
a) Erfassen einer Dienstgüte in einem Kommunikationssystem (KS2) ;
b) Durchführen einer Koordinierungs-Umorganisation zum Umorganisieren von Koordinierungs-Funktionalitäten für verfügbare Stationen (T21 bis T24) im Kommunikationssystem (KS2);
c) wiederholtes Durchführen der Schritte a) und b) für verschiedene Koordinierungs-Organisationen im Kommunikationssystem (KS2);
d) Analysieren der verschiedenen erfassten Dienstgüten in den verschiedenen Koordinierungs-Organisationen; und
e) Auswählen einer Koordinierungs-Organisation in Abhängigkeit der Analyse in Schritt d),
**gekennzeichnet durch** den Schritt
f) Durchführen einer Kommunikation mit einem fremden Kommunikationssystem (KS1), das dasselbe Übertragungsmedium wie das Kommunikationssystem (KS2) nutzt.

4. Verfahren nach Patentanspruch 3, **dadurch gekennzeichnet , dass** in Schritt e) eine Koordinierungs-Organisation mit einer besten oder schlechtesten Dienstgüte ausgewählt wird.

5. Verfahren nach einem der Patentansprüche 3 oder 4, **dadurch gekennzeichnet, dass** die Dienstgüte eine Übertragungsqualität von Übertragungsressourcen in einem Zeitbereich, Frequenzbereich, Codebereich und/oder räumlichen Bereich eines gemeinsam genutzten Übertragungsmediums darstellt.

6. Verfahren nach einem der Patentansprüche 3 bis 5, **dadurch gekennzeichnet , dass** Auswählen der Koordinierungs-Organisation ein Einstellen einer Koordinierungsfunktionalität für einen Zeitbereich, Frequenzbereich, Codebereich und/oder räumlichen Bereich für verfügbare Stationen darstellt.

## Claims

1. Communication system having
at least one base station (B2) and at least one further station (T21 to T24), where the base station (B2) and/or at least some of the further stations (T21 to T24) have a coordination changeover switch for changing over a coordination functionality between participating stations;
a quality-of-service detection apparatus for detecting a quality of service in the communication system (KS2); and
an analysis apparatus for analyzing the detected quality of service in the communication system (KS2), where the coordination changeover switches in the stations (B2, T21 to T24) are controlled on the basis of the analysis performed,
**characterized in that** at least some of the stations have an external transmission interface for implementing data transmission with an external communication system, the external communication system (KS1) and the communication system (KS2) being designed to use a common transmission medium.

2. Communication system according to Patent Claim 1, **characterized in that** the quality-of-service detection apparatus and the analysis apparatus detect and analyze a transmission quality for transmission resources split in the space domain, in the time domain and/or in the domain of frequency or code.

3. Method for improving a quality of service in communication systems, having the following steps:
a) a quality of service is detected in a communication system (KS2);
b) coordination reorganization is performed in order to reorganize coordination functionalities for available stations (T21 to T24) in the communication system (KS2);
c) steps a) and b) are repeated for various coordination organizations in the communication system (KS2);
d) the various qualities of service detected in the various coordination organizations are analyzed; and
e) a coordination organization is selected on the basis of the analysis in step d)
**characterized by** the step
f) communication is effected with an external communication system (KS1) which uses the same transmission medium as the communication system (KS2).

4. Method according to Patent Claim 3, **characterized in that** step e) involves a coordination organization with the best or worst quality of service being selected.

5. Method according to one of Patent Claims 3 or 4, **characterized in that** the quality of service is a transmission quality for transmission resources in a time domain, a frequency domain, a code domain and/or a space domain of a jointly used transmission medium.

6. Method according to one of Patent Claims 3 to 5, **characterized in that** selection of the coordination organization is the setting of a coordination functionality for a time domain, a frequency domain, a code domain and/or a space domain for available stations.

## Revendications

1. Système de communication comprenant au moins une station de base (B2) et au moins une autre station (T21 à T24), la station de base (B2) et/ou au moins une partie des autres stations (T21 à T24) présentant un inverseur de coordination pour l'inversion d'une fonctionnalité de coordination entre des stations impliquées, un dispositif d'enregistrement de qualité de service pour l'enregistrement d'une qualité de service dans le système de communication (KS2), et un dispositif d'analyse pour mettre en oeuvre une analyse de la qualité de service enregistrée du système de communication (KS2), les inverseurs de coordination des stations (B2, T21 à T24) étant commandés en fonction de l'analyse effectuée,
**caractérisé en ce qu'**au moins une partie des stations présente une interface de transmission externe pour la réalisation d'une transmission de données avec un système de communication (KS1) extérieur, le système de communication (KS1) extérieur et le système de communication (KS2) étant réalisés pour utiliser un milieu de transmission commun.

2. Système de communication selon la revendication 1, **caractérisé en ce que** le dispositif d'enregistrement de qualité de service et le dispositif d'analyse enregistrent et analysent une qualité de transmission de ressources de transmission réparties dans l'espace, dans le temps et/ou selon la fréquence ou le code.

3. Procédé pour améliorer une qualité de service dans des systèmes de communication comprenant les étapes suivantes .
a) enregistrement d'une qualité de service dans un système de communication (KS2) ;
b) mise en oeuvre d'une réorganisation de coordination pour la réorganisation de fonctionnalités de coordination pour des stations (T21 à T24) disponibles dans le système de communication (KS2) ;
c) exécution répétée des étapes a) et b) pour différentes organisations de coordination dans le système de communication (KS2) ;
d) analyse des différentes qualités de service enregistrées dans les différentes organisations de coordination ; et
e) sélection d'une organisation de coordination en fonction de l'analyse à l'étape d),
**caractérisé par** l'étape
f) mise en oeuvre d'une communication avec un système de communication (KS1) externe, qui utilise le même milieu de transmission que le système de communication (KS2).

4. Procédé selon la revendication 3, **caractérisé en ce que**, à l'étape e), une organisation de coordination est sélectionnée avec une qualité de service optimale ou une qualité de service très mauvaise.

5. Procédé selon l'une quelconque des revendications 3 ou 4, **caractérisé en ce que** la qualité de service représente une qualité de transmission de ressources de transmission dans une plage de temps, une plage de fréquence, une plage de code et/ou une plage dans l'espace d'un milieu de transmission utilisé en commun.

6. Procédé selon l'une quelconque des revendications 3 à 5, **caractérisé en ce que** la sélection de l'organisation de coordination représente un réglage d'une fonctionnalité de coordination pour une plage de temps, une plage de fréquence, une plage de code et/ou une plage dans l'espace pour des stations disponibles.
